# EUROPÄISCHE PATENTSCHRIFT

(11) **EP 1 213 920 B1**
(45) Veröffentlichungstag und Bekanntmachung des Hinweises auf die Patenterteilung: **26.10.2005**
(21) Anmeldenummer: 01128438.7
(22) Anmeldetag: 05.12.2001
(51) Int. Cl.: G11B 20/10, G06F 3/06, H04N 5/76, H04N 5/92

(54) **Vorrichtung zur gleichzeitigen Aufzeichnung und/oder Wiedergabe mehrerer digitaler Videosignale**
Apparatus for simultaneous recording and/or reproduction of a plurality of video signals
Appareil pour l'enregistrement et/ou la reproduction simultanés de plusieurs signaux vidéo

(30) Priorität: 09.12.2000 DE 10061412
(43) Veröffentlichungstag der Anmeldung: 12.06.2002
(73) Patentinhaber: Grundig Multimedia B.V., 1083HJ Amsterdam (NL)
(72) Erfinder: Braig, Rudolf, 90471 Nürnberg (DE); Thoma, Heinrich, 90471 Nürnberg (DE)
(74) Vertreter: Pröll, Jürgen

(56) Entgegenhaltungen:
- WO-A-99/48094
- US-A- 5 519 684
- US-A- 5 715 104
- US-A- 5 987 211

## Beschreibung

Die Erfindung betrifft eine Vorrichtung zur gleichzeitigen Aufzeichnung und/oder Wiedergabe mehrerer digitaler Videosignale.

Aus der DE 198 36 987 A1 ist bereits eine Einrichtung zur gleichzeitigen Aufzeichnung und Wiedergabe von Signalen, z. B. Audiosignalen, Videosignalen oder Messwerten, mit jederzeit auswählbarer Startposition der Wiedergabe bekannt. Bei dieser bekannten Einrichtung werden digitale Signale über einen Treiber in ein RAM eingeschrieben und von dort wieder ausgelesen. Während der Wiedergabe ist ein Vor- und Zurückspringen innerhalb der gesamten aufgezeichneten Information möglich. Es ist auch eine mehrmalige Wiederholung möglich, während die aktuell ankommende Information weiterhin aufgezeichnet wird. Mittels der bekannten Einrichtung ist es beispielsweise möglich, Verkehrsmeldungen in einem Autoradio oder auch Teile von Fernsehbeiträgen wiederholt abzuspielen, wobei sichergestellt ist, dass aktuell übertragene Sendebeiträge nicht verloren gehen.

Aus US -A-5 715 104 ist eine magnetische Aufnahme- und Wiedergabevorrichtung offenbart um Informationen auf ein Magnetband aufzuzeichnen. Hierzu ist ein Rotationskopf vorhanden, der nach dem bekannten Schrägspuraufzeichnungsverfahren arbeitet. Der Rotationskopf arbeitet mit einer m-fachen Rotationsgeschwindigkeit, um die Anzahl der Schrägspuren auf dem Magnetband zu erhöhen. Hierdurch können zeitgleich zwei Signale aufgezeichnet werden.

Aus WO 99 48094 A ist ein Verfahren zur Aufzeichnung und Wiedergabe von Echtzeitinformationen offenbart, insbesondere eines Videosignals. Hierzu werden die Echtzeitinformationen in fest definierte Segment und Segmentgrößen gespeichert. Außerdem werden sogenannte "Bridging-Blocks" erzeugt und in vordefinierten Speicherplätzen des Speichermediums gespeichert.

Aus US-A-5 519 684 ist ein Daten-Puffer beschrieben, der als Puffer für eine Festplatte dient und einem Schreib-Lesevorgang vorgeschaltet ist, beim Betrieb der Festplatte. Mit dieser Anordnung kann, selbst wenn die Datenrate der Festplatte nicht sehr groß ist, in gewissen Grenzen eine Datenübertragung zwischen der Festplatte und einem Ein-/Ausgang für Audio-, MIDI- und/oder BildDaten durchgeführt werden.

Aus US-A-5 987 211 ist ein Speicherbauelement bekannt, welches aus diversen Elementen wie Speicherelementen besteht und Benutzerschnittstellen, Systemsteuerungcodes enthält und insbesondere Spiel-Software enthalten kann.

Weiterhin sind aus der DE 198 44 635 A1 ein Verfahren und eine Vorrichtung zum sofortigen Erfassen von Videobildern bekannt, wobei mittels eines Aufzeichnungsbefehls während der Übertragung einer gegenwärtig auf einem Bildschirm dargestellten Videoinformation erreicht werden kann, dass die Videoinformation auch einer Speichervorrichtung zugeführt und dort aufgezeichnet wird. Als Speichervorrichtung wird ein Festplatten-Laufwerk verwendet. Dieses kann in einem Computersystem enthalten sein. Weiterhin kann die Speichervorrichtung auch integrierter Bestandteil eines Fernsehempfangsgerätes sein. Ferner ist es aus dieser Druckschrift bekannt, gleichzeitig einen Aufzeichnungs- und einen Wiedergabevorgang durchzuführen. Dabei erfolgt ein Empfang eines aufzuzeichnenden Stromes von Videodaten, ein Übertragen des Stromes von Videodaten in eine Speichervorrichtung, ein Speichern des Stromes von Videodaten in der Speichervorrichtung, ein Empfangen eines Befehls zum Wiedergeben eines früher aufgezeichneten Stromes von Videodaten und ein Entnehmen des früher aufgezeichneten Stromes von Videodaten aus der Speichervorrichtung, wobei die Schritte des Übertragens und Empfangens gleichzeitig während einer gleichen Zeitperiode durchgeführt werden, wenn ein Strom von Videodaten aufgezeichnet werden soll, während ein früher aufgezeichneter Strom von Videodaten entnommen wird.

Ausgehend von diesem Stand der Technik liegt der Erfindung die Aufgabe zugrunde, die Aufzeichnungs-/Wiedergabemöglichkeiten der bekannten Vorrichtung zu erweitern.

Diese Aufgabe wird durch eine Vorrichtung mit den im Anspruch 1 angegebenen Merkmalen gelöst. Vorteilhafte Ausgestaltungen und Weiterbildungen der Erfindung sind in den abhängigen Ansprüchen angegeben.

Die Vorteile der Erfindung bestehen insbesondere darin, dass mittels der beanspruchten Vorrichtung gleichzeitig von verschiedenen Signalquellen abgeleitete Signale mittels ein und derselben Speichervorrichtung aufgezeichnet werden können. Dadurch spielen im Unterschied zu bekannten Aufzeichnungsgeräten auch Zeitüberschneidungen verschiedener aufzuzeichnender Wunschsendungen keine Rolle mehr. Der Benutzer muss sich nicht mehr für eine der beiden bzw. der mehreren gleichzeitig übertragenen Sendungen entscheiden, sondern kann beide bzw. alle gleichzeitig aufzeichnen.

Weiterhin können mittels der beanspruchten Vorrichtung auch verschiedene aufgezeichnete Beiträge gleichzeitig wiedergegeben werden. Diese wiedergegebenen Beiträge können im Sinne einer Bild-im-Bild-Darstellung oder einer Split-Screen-Darstellung auf dem Bildschirm eines Fernsehempfängers dargestellt werden. Sie können aber auch zur Darstellung verschiedenen Fernsehgeräten zugeführt werden. Vorzugsweise erlaubt es die beanspruchte Vorrichtung weiterhin, zwei gleichzeitig wiedergegebene Signale gleichzeitig auf verschiedenen Aufzeichnungsträgern bzw. Videorecordern aufzuzeichnen.
Auch eine Bildschirmdarstellung eines der wiedergegebenen Beiträge und eine gleichzeitige Aufzeichnung des anderen der wiedergegebenen Beiträge auf einen Videorecorder ist durchführbar. Bisher konnte eine gleichzeitige Wiedergabe mehrerer Aufzeichnungsbeiträge nur durchgeführt werden, wenn mehrere Aufzeichnungs-/Widergabegeräte zur Verfügung standen.

Weitere Vorteile der Erfindung ergeben sich aus deren beispielhafter Erläuterung anhand der Figuren. Es zeigt
Figur 1 ein Blockschaltbild eines ersten Ausführungsbeispiels für die Erfindung und
Figur 2 ein Blockschaltbild eines zweiten Ausführungsbeispiels für die Erfindung.

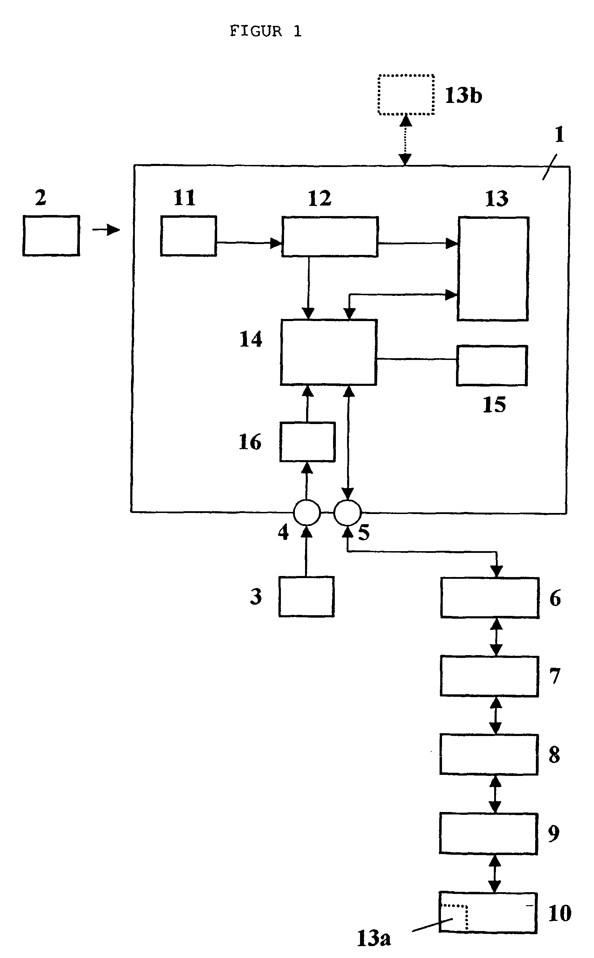

Die Figur 1 zeigt ein Blockschaltbild eines ersten Ausführungsbeispiels für die Erfindung. Bei diesem ersten Ausführungsbeispiel ist eine Speichereinheit 13 integrierter Bestandteil eines Fernsehempfängers 1. Weiterhin weist der gezeigte Fernsehempfänger einen Fernbedienungsempfänger 11, eine als Mikrocomputer realisierte Steuereinheit 12, einen Schaltungsblock 14, welcher eine Schalteinheit, A/D-Wandler, D/A-Wandler und eine Coder/Decoder-Einheit aufweist, einen Bildschirm 15 und eine Frontendeinheit 16 auf. Weiterhin ist der dargestellte Fernsehempfänger 1 mit Geräteschnittstellen 4 und 5 versehen, wobei es sich bei der Geräteschnittstelle 4 um eine Antennen- bzw. Kabelanschlussbuchse handelt und bei der Geräteschnittstelle 5 um eine HAVI-Schnittstelle. Über diese HAVI-Schnittstelle ist das Fernsehgerät 1 an einen seriellen Bus angeschlossen, an welchen auch eine Vielzahl weiterer Aufzeichnungs- und/oder Wiedergabegeräte angeschlossen ist. Im gezeigten Ausführungsbeispiel sind dies eine Settop-Box 6, ein erster Videorecorder 7, ein zweiter Videorecorder 8, ein zweiter Fernsehempfänger 9 und ein Personal-Computer 10. Die Bedienung des Fernsehempfängers 1 erfolgt mittels eines Fernbedienungsgebers 2, welcher Infrarot-Signale an den Fernbedienungsempfänger 11 überträgt.

Über den an die HAVI-Schnittstelle angeschlossenen seriellen Bus erfolgt eine bidirektionale Übertragung von digitalen Videosignalen im Zeitmultiplex in Form eines Datenstromes, wobei die Steuereinheit 12 des Fernsehempfängers 1 Masterfunktion ausübt.

Mittels der gezeigten Vorrichtung kann in vorteilhafter Weise eine gleichzeitige Aufzeichnung zweier von verschiedenen Signalquellen abgeleiteter Videosignale erfolgen, was nachfolgend beispielhaft erläutert wird.

Stellt ein Fernsehzuschauer während der Betrachtung einer Fernsehsendung fest, dass er diese Sendung zum Zwecke einer späteren nochmaligen Betrachtung aufzeichnen möchte, so gibt er mittels des Fernbedienungsgebers einen entsprechenden Aufzeichnungsbefehl ein und ordnet dem Aufzeichnungsbeitrag eine laufende Nummer zu. Als Folge davon steuert der Mikrocomputer 12 die Schalteinheit 14 und die Speichereinheit 13 derart an, dass die von der Antenne 3 abgeleiteten Fernsehsignale über die Antennenbuchse 4 und die Frontendeinheit 16, die einen Tuner aufweist, an den Schaltungsblock 14 weitergegeben werden. Dort erfolgt eine A/D-Wandlung des Signals, eine MPEG-Codierung und das Schließen eines Schalters derart, dass die von der Antenne 3 abgeleiteten Signale mittels der Speichereinheit 13 aufgezeichnet werden. Der Zuschauer kann dabei die Sendung weiterhin am Bildschirm 15 betrachten.

Möchte der Zuschauer nun während der laufenden Aufzeichnung des momentan betrachteten Sendebeitrags ein von einer anderen Signalquelle abgeleitetes weiteres Videosignal ebenfalls mittels der Speichereinheit 13 aufzeichnen, dann bringt er durch Betätigung einer Sondertaste des Fernbedienungsgebers 2 die Vorrichtung in eine Mehrfachaufzeichnungs-Betriebsart. Danach wählt er ebenfalls mittels des Fernbedienungsgebers 2 die weitere Signalquelle aus, von der das weitere Videosignal abgeleitet werden soll, und ordnet dem weiterhin aufzuzeichnenden Videosignal eine weitere laufende Nummer zu. Bei der weiteren Signalquelle kann es sich um die Settop-Box 6, den ersten Videorecorder 7, den zweiten Videorecorder 8, den zweiten Fernsehempfänger 9, den Personal-Computer 10 oder auch einen anderen Empfangskanal des Fernsehempfängers 1 handeln. Im letztgenannten Fall kann der Fernsehempfänger 1 ein Gerät mit zwei Tunern sein.

Als Reaktion auf diese Bedienbefehle sorgt der Mikrocomputer 12 durch eine entsprechende Ansteuerung der Schalteinheit 14 und der Speichereinheit 13 dafür, dass die aufzuzeichnenden Signale im Zeitmultiplex der Speichereinheit 13 zugeführt und dort aufgezeichnet werden. Der wahlfrei adressierbare Speicher 13 wird dabei vom Mikrocomputer 12 derart adressiert, dass die Videosignale jeweils an einem Speicheradressenbereich abgespeichert werden, der der jeweiligen Sendung individuell zugeordnet ist. Die Aufzeichnung der Videosignale erfolgt dabei in Echtzeit.

Zur gleichzeitigen Aufzeichnung zweier von verschiedenen Signalquellen abgeleiteter Videosignale kann auch eine Vorprogrammierung eines nicht gezeichneten, mit dem Mikrocomputer 12 zusammenwirkenden Programmwunschspeichers erfolgen. Im Rahmen dieser Vorprogrammierung werden mittels der Tastatur des Fernbedienungsgebers 2 die Signalquellen spezifiziert, die Anfangs- und die Endzeiten angegeben und den aufzuzeichnenden Videosignalen laufende Nummern zugeordnet. Sind - was in der Praxis der Regelfall sein dürfte - die Anfangszeiten der aufzuzeichnenden Videosignale unterschiedlich, dann beginnt zunächst unter Steuerung durch den Mikrocomputer 12 die Aufzeichnung des früher beginnenden Sendebeitrags. Ist der Anfangszeitpunkt der später aufzuzeichnenden Sendung erreicht, dann steuert der Mikrocomputer 12 die Schalteinheit 14 und die Speichereinheit 13 im Sinne einer gleichzeitigen Aufzeichnung der beiden Videosignale, wobei diese gleichzeitige Aufzeichnung - wie es oben bereits erläutert wurde - derart erfolgt, dass die dem jeweiligen Videosignal zugehörenden digitalen Aufzeichnungsdaten im Sinne eines Zeitmultiplexverfahrens unterschiedlichen Speicherbereichen zugeführt werden, wobei beiden Videosignalen jeweils automatisch durch den Mikrocomputer 12 ein eigener Speicherbereich zugeordnet wird. Auch hier erfolgt die Aufzeichnung der Videosignale in Echtzeit.

Mittels der gezeigten Vorrichtung kann auch eine gleichzeitige Wiedergabe zweier mittels der Speichereinheit 13 aufgezeichneter Videosignale erfolgen, was nachfolgend beispielhaft erläutert wird.

Möchte ein Zuschauer zwei mittels der Speichereinheit 13 aufgezeichnete Fernsehsendungen gleichzeitig wiedergeben, so gibt er mittels einer Sondertaste des Fernbedienungsgebers 2 einen Befehl ein, der den Fernsehempfänger 1 in die Mehrfachwiedergabe-Betriebsart bringt. Danach gibt er ebenfalls mittels des Fernbedienungsgebers 2 die den wiederzugebenden Fernsehsendungen zugehörigen laufenden Nummern ein, so dass der Mikrocomputer 12 die entsprechende Adressierung des Speichers 13 zur Signalwiedergabe durchführen kann. Ferner spezifiziert der Benutzer durch entsprechende Betätigungen des Fernbedienungsgebers die gewünschte Darstellungsart der wiedergegebenen Signale.

So können die wiedergegebenen Signale als Split-Screen-Darstellung oder als Bild-im-Bild-Darstellung auf dem Bildschirm des Fernsehempfängers 1 angezeigt werden. Weiterhin ist es auch möglich, eines der wiedergegebenen Signale auf dem Bildschirm des Fernsehempfängers 1 und das andere auf dem Bildschirm des zweiten Fernsehempfängers 9 darzustellen. Ferner kann eines der wiedergegebenen Signale mittels des ersten Videorecorders 7 und das andere mittels des Videorecorders 8 aufgezeichnet werden.

Um dem Benutzer sowohl zur Aufzeichnung als auch zur Wiedergabe die Bedienung zu erleichtern, erfolgt vorzugsweise nach der Einleitung der jeweiligen Betriebsart eine Darstellung einer Menüseite auf dem Bildschirm des Fernsehempfängers 1. Soll eine gleichzeitige Aufzeichnung mehrerer Videosignale erfolgen, kann der Benutzer mittels des Fernbedienungsgebers der Reihe nach die erforderlichen Daten auf der angezeigten Aufzeichnungs-Menüseite eingeben, um die aufzuzeichnenden Videosignale näher zu spezifizieren. Soll hingegen eine gleichzeitige Wiedergabe mehrerer bereits aufgezeichneter Videosignale erfolgen, kann der Benutzer mittels des Fernbedienungsgebers der Reihe nach die erforderlichen Daten auf der angezeigten Wiedergabe-Menüseite eingeben, um die wiederzugebenden Videosignale und deren Darstellungsweise näher zu spezifizieren.

Alternativ zu der vorstehend beschriebenen Ausführungsform kann der Speicher 13 auch ein lösbar mit dem Fernsehgerät 1 verbundener Speicher 13b sein, wie er in der Figur 1 gestrichelt dargestellt ist. Dieser Speicher ist ähnlich einer Floppy-Disc oder einer CD-ROM bei einem Computer ohne Werkzeug einsetzbar und herausnehmbar. Weiterhin kann der Speicher 13 auch in den Personal-Computer 10 eingesetzt sein, wie es in der Figur 1 mit 13a angedeutet ist. In diesem Fall kann es sich beim Speicher um eine Festplatte handeln.

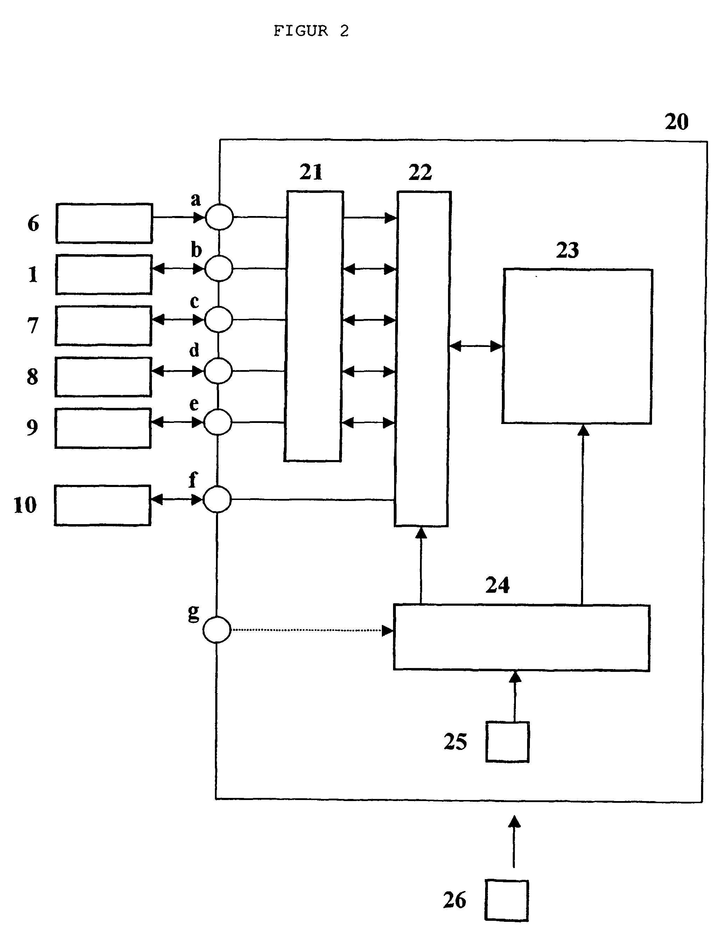

Die Figur 2 zeigt ein Blockschaltbild eines zweiten Ausführungsbeispiels für die Erfindung. Bei diesem zweiten Ausführungsbeispiel ist die Speichereinheit 23 Bestandteil eines eigenständigen Gerätes 20, welches über ein Geräteschnittstelle b mit einem Fernsehempfänger 1 verbunden ist. Das eigenständige Gerät 20 ist vorzugsweise als transportables Handgerät realisiert, dessen Außenabmessungen kleiner sind als 30 cm x 20 m x 10 cm und dessen kleines Gewicht einen platzsparenden und einfachen Transport erlaubt.

Das in der Figur 2 gezeigte Gerät 20 weist neben der bereits genannten Schnittstelle b zum Fernsehgerät 1 weitere Schnittstellen a, c, d, e und f auf, über welche es mit einer Settop-Box 6, einem ersten Videorecorder 7, einem zweiten Videorecorder 8, einem zweiten Fernsehempfänger 9 und einem Personal-Computer 10 verbunden ist. Von diesen Geräten ist die Settop-Box 6 ein reines Wiedergabegerät. Mit diesem ist das eigenständige Gerät 20 unidirektional verbunden. Mit den Geräten 1, 7, 8, 9 und 10 steht das eigenständige Gerät 20 in bidirektionale Verbindung.

Das Gerät 20 weist einen Schaltungsblock 21 auf, in welchem eventuell notwendige A/D- oder D/A-Wandlungen der aufzuzeichnenden oder wiederzugebenden Videosignale erfolgen. Mit diesem Schaltungsblock 21 ist ein Schaltungsblock 22 verbunden, welcher eine Schalteinheit und eine Coder-/Decodereinheit enthält. Weiterhin ist der Schaltungsblock 22 mit einem Speicher 23 mit wahlfreiem Zugriff verbunden.

Der Schaltungsblock 22 und der Speicher 23 werden von einer Steuereinheit 24 gesteuert, die vorzugsweise als Mikrocomputer realisiert ist. Die Steuerbefehle für den Mikrocomputer 24 werden mittels eines Fernbedienungsgebers 26 eingegeben und dem Mikrocomputer 24 über den Fernbedienungsempfänger 25 zugeführt. Alternativ dazu oder zusätzlich können dem Mikrocomputer 24 auch Steuerbefehle von der Schnittstelle g des eigenständigen Gerätes 20 aus zugeführt werden, die von der Steuereinheit eines an das Gerät 20 angeschlossenen Fernsehempfängers abgeleitet sind, beispielsweise vom Mikrocomputer des Fernsehempfängers 1.

Hat das transportable, eigenständige Gerät 20 keine eigene Fernbedienung, dann können die zu einer gleichzeitigen Aufzeichnung bzw. Wiedergabe notwendigen Bedienbefehle auch mittels der Fernbedienung des Fernsehempfängers eingegeben werden und dem Mikrocomputer 24 des Gerätes 20 über den Mikrocomputer des Fernsehgerätes und die Schnittstelle g zugeführt werden.

Eine gleichzeitige Aufzeichnung zweier von verschiedenen Signalquellen abgeleiteter Videosignale erfolgt bei der in der Figur 2 gezeigten Vorrichtung wie folgt:
Stellt ein Fernsehzuschauer während der Betrachtung einer Fernsehsendung fest, dass er diese Sendung zum Zwecke einer späteren nochmaligen Betrachtung aufzeichnen möchte, so gibt er mittels des Fernbedienungsgebers 26 einen entsprechenden Aufzeichnungsbefehl ein und ordnet dem Aufzeichnungsbeitrag eine laufende Nummer zu. Als Folge davon steuert der Mikrocomputer 24 die Schalteinheit 22 und die Speichereinheit 23 derart an, dass vom Fernsehempfänger 1 abgeleiteten Fernsehsignale über die Schnittstelle b an den Schaltungsblock 21 weitergegeben werden. Dort erfolgt eine A/D-Wandlung des Signals. Im Schaltungsblock 22 erfolgt eine MPEG-Codierung und das Schließen eines Schalters derart, dass die momentan auf dem Bildschirm des Fernsehempfängers 1 dargestellten Signale auch mittels der Speichereinheit 23 aufgezeichnet werden.

Möchte der Zuschauer nun während der laufenden Aufzeichnung des momentan betrachteten Sendebeitrags ein von einer anderen Signalquelle abgeleitetes weiteres Videosignal ebenfalls mittels der Speichereinheit 23 aufzeichnen, dann bringt er durch Betätigung einer Sondertaste des Fernbedienungsgebers 26 die Vorrichtung in eine Mehrfachaufzeichnungs-Betriebsart. Danach wählt er ebenfalls mittels des Fernbedienungsgebers 26 die weitere Signalquelle aus, von der das weitere Videosignal abgeleitet werden soll, und ordnet dem weiterhin aufzuzeichnenden Videosignal eine weitere laufende Nummer zu. Bei der weiteren Signalquelle kann es sich um die Settop-Box 6, den ersten Videorecorder 7, den zweiten Videorecorder 8, den zweiten Fernsehempfänger 9, den Personal-Computer 10 oder auch einen anderen Empfangskanal des Fernsehempfängers 1 handeln. Im letztgenannten Fall kann der Fernsehempfänger 1 ein Gerät mit zwei Tunern sein.

Als Reaktion auf diese Bedienbefehle sorgt der Mikrocomputer 24 durch eine entsprechende Ansteuerung der Schalteinheit 22 und der Speichereinheit 23 dafür, dass die aufzuzeichnenden Signale im Zeitmultiplex der Speichereinheit 23 zugeführt und dort aufgezeichnet werden. Der wahlfrei adressierbare Speicher 23 wird dabei vom Mikrocomputer 24 derart adressiert, dass die Videosignale jeweils an einem Speicheradressenbereich abgespeichert werden, der der jeweiligen Sendung individuell zugeordnet ist. Die Aufzeichnung der Videosignale erfolgt dabei in Echtzeit.

Zur gleichzeitigen Aufzeichnung zweier von verschiedenen Signalquellen abgeleiteter Videosignale kann auch eine Vorprogrammierung eines nicht gezeichneten, mit dem Mikrocomputer 24 zusammenwirkenden Programmwunschspeichers erfolgen. Im Rahmen dieser Vorprogrammierung werden mittels der Tastatur des Fernbedienungsgebers 26 die Signalquellen spezifiziert, die Anfangs- und die Endzeiten angegeben und den aufzuzeichnenden Videosignalen laufende Nummern zugeordnet. Sind - was in der Praxis der Regelfall sein dürfte - die Anfangszeiten der aufzuzeichnenden Videosignale unterschiedlich, dann beginnt zunächst unter Steuerung durch den Mikrocomputer 24 die Aufzeichnung des früher beginnenden Sendebeitrags. Ist der Anfangszeitpunkt der später aufzuzeichnenden Sendung erreicht, dann steuert der Mikrocomputer 24 die Schalteinheit 22 und die Speichereinheit 23 im Sinne einer gleichzeitigen Aufzeichnung der beiden Videosignale, wobei diese gleichzeitige Aufzeichnung - wie es oben bereits erläutert wurde - derart erfolgt, dass die dem jeweiligen Videosignal zugehörenden digitalen Aufzeichnungsdaten im Sinne eines Zeitmultiplexverfahrens unterschiedlichen Speicherbereichen zugeführt werden, wobei beiden Videosignalen jeweils automatisch durch den Mikrocomputer 24 ein eigener Speicherbereich zugeordnet wird. Auch hier erfolgt die Aufzeichnung der Videosignale in Echtzeit.

Mittels der gezeigten Vorrichtung kann auch eine gleichzeitige Wiedergabe zweier mittels der Speichereinheit 23 aufgezeichneter Videosignale erfolgen, was nachfolgend beispielhaft erläutert wird.

Möchte ein Zuschauer zwei mittels der Speichereinheit 23 aufgezeichnete Fernsehsendungen gleichzeitig wiedergeben, so gibt er mittels einer Sondertaste des Fernbedienungsgebers 26 einen Befehl ein, der das Gerät 20 in die Mehrfachwiedergabe-Betriebsart bringt. Danach gibt er ebenfalls mittels des Fernbedienungsgebers 26 die den wiederzugebenden Fernsehsendungen zugehörigen laufenden Nummern ein, so dass der Mikrocomputer 24 die entsprechende Adressierung des Speichers 23 zur Signalwiedergabe durchführen kann. Ferner spezifiziert der Benutzer durch entsprechende Betätigungen des Fernbedienungsgebers 26 die gewünschte Darstellungsart der wiedergegebenen Signale.

So können die wiedergegebenen Signale als Split-Screen-Darstellung oder als Bild-im-Bild-Darstellung auf dem Bildschirm des Fernsehempfängers 1 angezeigt werden. Weiterhin ist es auch möglich, eines der wiedergegebenen Signale auf dem Bildschirm des Fernsehempfängers 1 und das andere auf dem Bildschirm des zweiten Fernsehempfängers 9 darzustellen. Ferner kann eines der wiedergegebenen Signale mittels des ersten Videorecorders 7 und das andere mittels des Videorecorders 8 aufgezeichnet werden.

Um dem Benutzer sowohl zur Aufzeichnung als auch zur Wiedergabe die Bedienung zu erleichtern, erfolgt vorzugsweise nach der Einleitung der jeweiligen Betriebsart eine Darstellung einer Menüseite auf dem Bildschirm des Fernsehempfängers 1. Soll eine gleichzeitige Aufzeichnung mehrerer Videosignale erfolgen, kann der Benutzer mittels des Fernbedienungsgebers 26 der Reihe nach die erforderlichen Daten auf der angezeigten Aufzeichnungs-Menüseite eingeben, um die aufzuzeichnenden Videosignale näher zur spezifizieren. Soll hingegen eine gleichzeitige Wiedergabe mehrerer bereits aufgezeichneter Videosignale erfolgen, kann der Benutzer mittels des Fernbedienungsgebers 26 der Reihe nach die erforderlichen Daten auf der angezeigten Wiedergabe-Menüseite eingeben, um die wiederzugebenden Videosignale und deren Darstellungsweise näher zu spezifizieren.

## Patentansprüche

1. Vorrichtung zur Aufzeichnung und Wiedergabe digitaler Videosignale mit einer Steuereinheit, einer mit der Steuereinheit verbundenen Schalteinheit und einer mit der Steuereinheit und der Schalteinheit verbundenen Speichereinheit, wobei die Steuereinheit (12, 24) die Schalteinheit (14, 22) und die Speichereinheit (13, 23) derart ansteuert, dass eine gleichzeitige Aufzeichnung zweier von verschiedenen Signalquellen (1, 3, 6, 7, 8, 9, 10) abgeleiteter Videosignale erfolgt oder dass eine gleichzeitige Wiedergabe zweier mittels der Speichereinheit (13, 23) aufgezeichneter Videosignale erfolgt,
**dadurch gekennzeichnet, dass**
die Speichereinheit (13, 23) eine Speichereinheit mit wahlfreiem Zugriff ist, die Vorrichtung ein eigenständiges Gerät (20) ist und über eine Geräteschnittstelle (b) mit einem Fernsehempfänger (1) verbindbar ist und die Vorrichtung als transportables Handgerät realisiert ist, welches Außenabmessungen aufweist, die kleiner sind als 30 cm x 20 cm x 10 cm sind, die Vorrichtung einen Fembedienungsgeber (2, 26) aufweist, mittels dessen Bedientastatur eine Betriebsart der Vorrichtung einleitbar ist, in welcher eine gleichzeitige Aufzeichnung zweier von verschiedenen Signalquellen abgeleiteter Videosignale erfolgt und/oder mittels der Bedientastatur des Fernbedienungsgebers die Signalquellen auswählbar sind, die Vorrichtung einen Fernbedienungsgeber (2, 26) aufweist, mittels dessen Bedientastatur eine Betriebsart der Vorrichtung einleitbar ist, in welcher eine gleichzeitige Wiedergabe zweier mittels der Speichereinheit aufgezeichneter Videosignale erfolgt und/oder mittels der Bedientasten des Fernbedienungsgebers die wiederzugebenden Videosignale auswählbar sind, jedem aufzuzeichnendem Videosignal eine laufende Nummer zugeordnet ist und die Auswahl des jeweiligen Videosignals zur Wiedergabe durch Eingabe der dem jeweiligen Videosignal zugeordneten laufenden Nummer erfolgt.

2. Vorrichtung nach Anspruch 1,
**dadurch gekennzeichnet, dass**
die Vorrichtung eine Vielzahl von Geräteschnittstellen (a, b, c, d, e, f, g) aufweist, über welche sie mit einer Vielzahl von Aufzeichnungs- und/oder Wiedergabegeräten verbindbar ist und/oder der Vielzahl von Aufzeichnungs- und/oder Wiedergabegeräten analoge und digitale Aufzeichnungs- und/oder Wiedergabegeräte angehören und/oder die Vorrichtung einen Schaltungsteil (14, 21) aufweist, in welchem eine Analog-/Digital-Wandlung eines von einem analogen Wiedergabegerät abgeleiteten Videosignals erfolgt.

3. Vorrichtung nach einem der Ansprüche 1 oder 2,
**dadurch gekennzeichnet, dass**
die Vorrichtung einen Schaltungsteil (14, 21) aufweist, in welchem eine Digital-/Analog-Wandlung eines einem analogen Aufzeichnungs- oder Wiedergabegerät zuzuführenden Videosignals erfolgt und/oder die Vorrichtung einen Coder (14, 22) aufweist, der von verschiedenen Signalquellen abgeleitete Videosignale in einen digitalen Datenstrom umwandelt, in welchem die Videosignale im Zeitmultiplex enthalten sind und/oder der Coder ein MPEG-Coder ist.

4. Vorrichtung nach einem der vorangehenden Ansprüche,
**dadurch gekennzeichnet, dass**
die Vorrichtung einen Decoder (14, 22) aufweist, der die aus der Speichereinheit wiedergegebenen, im Zeitmultiplex vorliegenden Videosignale decodiert.

5. Vorrichtung nach einem der vorhergehenden Ansprüche,
**dadurch gekennzeichnet, dass**
zwei gleichzeitig wiedergegebene Signale als Bild-im-Bild- oder Split-Screen-Darstellung auf dem Bildschirm eines Fernsehempfängers dargestellt werden oder dass zwei gleichzeitig wiedergegebene Signale unterschiedlichen Bildschirmgeräten zur Darstellung zugeführt werden.

6. Vorrichtung nach einem der vorhergehenden Ansprüche,
**dadurch gekennzeichnet, dass**
mittels der Bedientasten des Fernbedienungsgebers (2, 26) eine Onscreen-Anzeige einer Menüseite auf dem Bildschirm eines Bildschirmgerätes auslösbar ist, auf welcher ein Inhaltsverzeichnis der Speichereinheit darstellbar ist und/oder die Auswahl eines Videosignals zur Wiedergabe mittels eines Cursors auf der dargestellten Menüseite erfolgt.

7. Vorrichtung nach einem der vorhergehenden Ansprüche,
**dadurch gekennzeichnet, dass**
die Vorrichtung einen Fernbedienungsempfänger (11, 25) aufweist, der ausgangsseitig mit der Steuereinheit verbunden ist und/oder der Fernbedienungsempfänger (11) und die Steuereinheit (12) Bestandteil eines Fernsehempfängers (1) sind und/oder der Fernbedienungsempfänger (25) und die Steuereinheit (24) Bestandteil des eigenständigen Gerätes (20) sind und/oder der Fernbedienungsempfänger (11) Bestandteil des Fernsehempfängers (1) ist und die empfangenen Bedienbefehle oder davon abgeleitete Signale vom Fernsehempfänger (1) aus an das externe eigenständige Gerät (20) weitergeleitet werden.

## Claims

1. Apparatus for recording and reproducing digital video signals with a control unit, a switching unit connected to the control unit and a memory unit connected to the control unit and the switching unit, wherein the control unit (12, 24) drives the switching unit (14, 22) and the memory unit (13, 23) in such a way that simultaneous recording of two video signals derived from different signal sources (1, 3, 6, 7, 8, 9, 10) takes place or simultaneous reproduction of two video signals recorded by means of the memory unit (13, 23) takes place,
**characterised in that**
the memory unit (13, 23) is a memory unit with optional access, the apparatus is a stand alone device (20) and can be connected to a television receiver (1) via a device interface (b) and the apparatus is implemented as a transportable hand device which has outer dimensions smaller than 30 cm x 20 cm x 10 cm, the apparatus has a remote control (2, 26), by means of the operator keypad of which a mode of operation of the apparatus can be initiated, in which simultaneous recording of two video signals derived from different signal sources takes place and/or the signal sources can be selected by means of the operator keypad of the remote control, the apparatus has a remote control (2, 26) by means of the operator keypad of which a mode of operation of the apparatus can be initiated in which simultaneous reproduction of two video signals recorded by means of the memory unit takes place and/or the video signals to be reproduced can be selected by means of the operator keys of the remote control, a consecutive number is allocated to each video signal to be recorded and selection of the respective video signal for reproduction is done by inputting the consecutive number allocated to the respective video signal.

2. Apparatus according to claim 1,
**characterised in that**
the apparatus has a multiplicity of device interfaces (a, b, c, d, e, f, g) via which it can be connected to a multiplicity of recording and/or reproduction devices and/or analog and digital recording and/or reproduction devices belong to the multiplicity of recording and/or reproduction devices and/or the apparatus has a switching part (14, 21) in which an analog to digital conversion of a video signal derived from an analog reproduction device takes place.

3. Apparatus according to one of claims 1 or 2,
**characterised in that**
the apparatus has a switching part (14, 21) in which a digital to analog conversion of a video signal to be fed to an analog recording or reproduction device takes place and/or the apparatus has a coder (14, 22) which converts video signals derived from various signal sources into a digital data stream in which the video signals are contained in the time multiplex and/or the coder is an MPEG coder.

4. Apparatus according to one of the preceding claims,
**characterised in that**
the apparatus has a decoder (14, 22) which decodes the video signals reproduced from the memory unit and present in the time multiplex.

5. Apparatus according to one of the preceding claims,
**characterised in that**
two simultaneously reproduced signals are represented on the screen of a television receiver as a picture-in-picture or split screen representation or two simultaneously reproduced signals are fed to different screen devices for representation.

6. Apparatus according to one of the preceding claims,
**characterised in that**
by means of the operator keys of the remote control (2, 26) an onscreen display of a menu page can be triggered on the screen of a.screen device, on which a list of contents of the memory unit can be represented and/or selection of a video signal for reproduction is done by means of a cursor on the menu page represented.

7. Apparatus according to one of the preceding claims,
**characterised in that**
the apparatus has a remote control receiver (11, 25) which is connected on the output side to the control unit and/or the remote control receiver (11) and the control unit (12) are part of a television receiver (1) and/or the remote control receiver (25) and the control unit (24) are part of the stand-alone device (20) and/or the remote control receiver (11) is part of the television receiver (1) and the received operator commands or signals derived therefrom are forwarded to the external stand-alone device (20) from the television receiver (1).

## Revendications

1. Dispositif pour l'enregistrement et la reproduction de signaux vidéo numériques, comportant une unité de commande, une unité de commutation reliée à l'unité de commande et une unité de mémoire reliée à l'unité de commande et à l'unité de commutation, dans lequel l'unité de commande (12,27) commande l'unité de commutation (14,24) et l'unité de mémoire (13,23) de telle sorte qu'un enregistrement simultané de deux signaux vidéo provenant de différentes sources de signaux (1,3,6,7,8,9,10) est exécuté ou qu'une reproduction simultanée à l'aide d'une reproduction simultanée au moyen de l'unité de mémoire (13,23) est exécutée,
**caractérisé en ce que**
l'unité de mémoire (13,23) est une unité de mémoire à accès direct, le dispositif est un appareil autonome (20) et peut être relié par l'intermédiaire d'une interface (b) d'appareil à un récepteur de télévision (1) et que le dispositif est agencé sous la forme d'un appareil manuel transportable, qui possède des dimensions extérieures qui sont inférieures à 30 cm x 20 cm x 10 cm, que le dispositif possède un générateur de télécommande (2,26), à l'aide du clavier de commande duquel on peut déclencher un type de fonctionnement du dispositif, dans lequel un enregistrement simultané de deux signaux vidéo provenant de sources de signaux différentes est exécuté et/ou les sources de signaux peuvent être sélectionnées à l'aide du clavier de commande du générateur de télécommande, que le dispositif possède un générateur de télécommande (2,26), à l'aide du clavier de commande duquel peut être déclenché un type de fonctionnement du dispositif, dans lequel une reproduction simultanée de deux signaux vidéo enregistrés à l'aide de l'unité de mémoire est exécutée et/ou les signaux vidéo devant être reproduits peuvent être sélectionnés à l'aide des touches de commande du générateur de télécommande, un numéro courant est associé à chaque signal vidéo devant être enregistré et la sélection du signal vidéo respectif pour la reproduction est exécutée par l'introduction du numéro courant associé au signal vidéo respectif.

2. Dispositif selon la revendication 1, **caractérisé en ce que** le dispositif comporte une multiplicité d'interfaces (a,b,c,d,e,f,g) d'appareils, à l'aide desquelles le dispositif peut être relié à une multiplicité d'appareils d'enregistrement et/ou de reproduction et/ou des appareils analogiques ou numériques d'enregistrement/de reproduction font partie de la multiplicité d'appareils d'enregistrement et/ou de reproduction, et/ou le dispositif comporte une partie de circuit (14,21), dans laquelle est réalisée une conversion analogique/numérique d'un signal vidéo délivré par un appareil de reproduction analogique.

3. Dispositif selon la revendication 1 ou 2, **caractérisé en ce que** le dispositif comporte une partie de circuit (14,21), dans laquelle une conversion numérique/analogique d'un signal vidéo devant être envoyé à un appareil d'enregistrement ou de reproduction analogique est exécutée et/ou le dispositif comporte un codeur (14,22), qui convertit des signaux vidéo délivrés par différentes sources de signaux en un flux de données numériques, dans lequel les signaux vidéo sont contenus dans le système de multiplexage temporel et/ou le codeur est un codeur MPEG.

4. Dispositif selon l'une des revendications précédentes, **caractérisé en ce que** le dispositif comporte un décodeur (14,22), qui décode des signaux vidéo reproduits à partir de l'unité de mémoire et présents dans le système de multiplexage temporel.

5. Dispositif selon l'une des revendications précédentes, **caractérisé en ce que** deux signaux reproduits simultanément sont représentés en tant qu'image-dans-image ou en tant que représentation à écran divisé sur l'écran d'un récepteur de télévision, ou que deux signaux reproduits simultanément sont envoyés, pour leur représentation, à des appareils différents à écran.

6. Dispositif selon l'une des revendications précédentes, **caractérisé en ce qu'**à l'aide des touches de commande du générateur de télécommande (2,26), on peut déclencher un affichage on-screen d'une page de menu sur l'écran d'un appareil à écran, affichage dans lequel est représentée une table des matières de l'unité de mémoire et/ou la sélection d'un signal vidéo pour la reproduction est exécutée à l'aide d'un curseur sur la page représentée du menu.

7. Dispositif selon l'une des revendications précédentes, **caractérisé en ce que** le dispositif comporte un récepteur de télécommande (11,25), qui est relié côté entrée à l'unité de commande et/ou le récepteur de télécommande (11) et l'unité de commande (12) font partie d'un récepteur de télévision (1) et/ou le récepteur de télécommande (25) et l'unité de commande (24) font partie de l'appareil autonome (20) et/ou le récepteur de télécommande (11) fait partie du récepteur de télévision (1) et les instructions de commande reçues ou des signaux dérivés de ces instructions sont transmis depuis le récepteur de télévision (1) à l'appareil externe autonome (20).
